# EUROPÄISCHE PATENTANMELDUNG

(11) **EP 3 112 704 A1**
(43) Veröffentlichungstag der Anmeldung: **04.01.2017**
(21) Anmeldenummer: 16001471.8
(22) Anmeldetag: 01.07.2016
(51) Int. Cl.: F16C 1/06, F16L 57/00, A01D 34/90

(54) **LAGERANORDNUNG FÜR EINE IN EINEM SCHUTZROHR GEFÜHRTE ANTRIEBSWELLE**

(30) Priorität: 03.07.2015 US 201514791277
(71) Anmelder: Andreas Stihl AG & Co. KG, 71336 Waiblingen (DE)
(72) Erfinder: Davis, Robert, Virginia Beach, VA 23452 (US); Honold, Timo, Virginia Beach, VA 23462 (US); Frandsen, Thomas, Norfolk, VA 23503 (US); Koestler, Christian, Virginia Beach, VA 23452 (US); Rethaber, Achim, 70372 Stuttgart (DE); Petersen, Björn, 71723 Großbottwar (DE); Gastenauer, Andreas, Chesapeake, VA 22320 (US); Giesea, Andreas, Ojai, CA 93023 (US)
(74) Vertreter: Wasmuth, Rolf

(57) **Zusammenfassung**

Die Erfindung betrifft eine Lageranordnung für eine in einem Schutzrohr (4) geführte Antriebswelle (10), die ein Werkzeug (7) mit einem Antrieb (2) verbindet. Die Lageranordnung besteht aus mehreren im Schutzrohr (4) angeordneten Lagerrohrsegmenten (30), die in Längsrichtung (13) des Schutzrohres (4) hintereinander liegen und von der Antriebswelle (10) durchragt sind. Zumindest ein Lagerrohrsegment (30) ist als Lagerabschnitt (14, 14') mit einer zentralen Lagerhülse (15) ausgebildet ist, die von ihrem Außenumfang (16) abstehende Stützelemente (17) umfasst, wobei die Lagerhülse (15) des Lagerabschnitts (14, 14') gegenüber dem Innenumfang des Schutzrohres (4) von den Stützelementen (17) radial abgestützt ist. Um eine Lageranordnung für eine in einem Schutzrohr geführte Antriebswelle bereitzustellen, die einfach herstellbar, leicht montierbar und an unterschiedliche Einbauverhältnisse anpassbar ist, ist der Lagerabschnitt (14, 14') aus der Lagerhülse (15) und den Stützelementen (17) einteilig ausgebildet ist, wobei im Schutzrohr (4) mehrere Lagerabschnitte (14, 14') aufgenommen sind. im Schutzrohr (4) folgen die Lagerabschnitte (14, 14') aufeinander, wobei die summierte Länge (SL) der angeordneten Lagerrohrsegmente (30) größer als 60% der Länge (L) des Schutzrohres (4) ist.

## Beschreibung

Die Erfindung betrifft eine Lageranordnung für eine in einem Schutzrohr geführte Antriebswelle, die ein Werkzeug mit einem Antrieb verbindet.

Die Lageranordnung besteht aus mehreren im Schutzrohr angeordneten Lagerrohrsegmenten, die in Längsrichtung des Schutzrohres hintereinander liegen und von der Antriebswelle durchragt sind. Zumindest ein Lagerrohrsegment ist als Lagerabschnitt mit einer zentralen Lagerhülse ausgebildet, wobei die Lagerhülse vom Außenumfang abstehende Stützelemente umfasst, über die der Lagerabschnitt im Schutzrohr radial abgestützt wird.

Die Lagerabschnitte zur Abstützung der Antriebswelle gegenüber dem Schutzrohr können im Bereich von Schwingungsknoten der Antriebswelle angeordnet sein. Es sind auch Lagerrohre bekannt, die als extrudiertes Kunststoffrohr ausgebildet sind und in das Schutzrohr eingeschoben werden und dieses über die gesamte Länge des Schutzrohres füllen.

Der Erfindung liegt die Aufgabe zugrunde, eine Lageranordnung für eine in einem Schutzrohr geführte Antriebswelle bereitzustellen, die einfach herstellbar, leicht montierbar und an unterschiedliche Einbauverhältnisse anpassbar ist.

Nach der Erfindung ist eine Lageranordnung vorgesehen, die eine in einem Schutzrohr geführte Antriebswelle lagert, die ein Werkzeug mit einem Antrieb verbindet. Die Lageranordnung besteht aus mehreren im Schutzrohr angeordneten Lagerrohrsegmenten. Die Lagerrohrsegmente liegen in Längsrichtung des Schutzrohres hintereinander und sind von der Antriebswelle durchragt. Zumindest ein Lagerrohrsegment ist als Lagerabschnitt mit einer zentralen Lagerhülse ausgebildet und umfasst vom Außenumfang der Lagerhülse abstehende Stützelemente. Die Lagerhülse ist von den Stützelementen gegen den Innenumfang des Schutzrohres radial abgestützt. Dabei ist der ein Lagerrohrsegment bildende Lagerabschnitt aus der Lagerhülse und den Stützelementen einteilig ausgebildet. In das Schutzrohr werden mehrere aufeinanderfolgende Lagerabschnitte eingeschoben, wobei die summierte Länge der eingeschobenen Lagerrohrsegmente größer ist als 60% der Länge des Schutzrohres; das Schutzrohr ist über mehr als 60% seiner Länge mit Lagerrohrsegmenten gefüllt.

Die einzelnen Lagerabschnitte sind kürzer als das Schutzrohr ausgebildet; zum Füllen des Schutzrohres müssen mehrere Lagerabschnitte hintereinander eingeschoben werden. Für einfache Lageranordnungen ist es ausreichend, an ausgewählten Stellen des Schutzrohres Lagerabschnitte anzuordnen und zu fixieren. Um eine gute Lagerung sicherzustellen, ist die summierte Länge der Lagerrohrsegmente größer als 60% der Länge des Schutzrohres.

Die erfindungsgemäße Ausbildung einer aus mehreren Lagerrohrsegmenten zusammengesetzten Lageranordnung gibt eine große Gestaltungsfreiheit. Die einzelnen Lagerrohrsegmente können den auftretenden lokalen Belastungen angepasst ausgebildet werden, so dass ein effizienter Materialeinsatz möglich ist. Auch können die einzelnen Lagerrohrsegmente in unterschiedlicher körperlicher Gestalt ausgebildet werden. Zur Bildung einer Lageranordnung können gleiche oder unterschiedliche Lagerrohrsegmente - z. B. der auftretenden Belastung angepasst - variabel miteinander kombiniert werden. Durch die Freiheit der Kombination der Lagerrohrsegmente ist eine belastungsangepasste Lagerung der Antriebswelle bei minimalem Materialeinsatz möglich.

Die Anordnung der Lagerabschnitte im Schutzrohr kann so getroffen werden, dass sich ein erster Lagerabschnitt an einem folgenden Lagerabschnitt abstützt. Dabei kann eine erste Stirnseite des ersten Lagerabschnittes an der folgenden Stirnseite des folgenden Lagerabschnittes anliegen. Eventuell auftretende Axialkräfte können so abgestützt werden.

In vorteilhafter Weiterbildung der Erfindung kann zwischen den Lagerabschnitten als weiteres Lagerrohrsegment ein axiales Abstandselement vorgesehen, so dass sich aufeinanderfolgende Lagerabschnitte über das axiale Abstandselement aufeinander abstützen.

Um die aneinander liegenden Lagerabschnitte gegen Durchdrehen zu sichern ist vorgesehen, dass eine Stirnseite eines ersten Lagerabschnittes mit sich axial erstreckenden Eingriffselementen in eine zugewandte Stirnseite des folgenden Lagerabschnittes eingreift oder mit sich axial erstreckenden Eingriffselementen an einer zugewandten Stirnseite des folgenden Lagerabschnittes anliegt. Zweckmäßig erfolgt die Anlage und/oder der Eingriff drehfest.

Vorteilhaft ist vorgesehen, den Lagerabschnitt im Schutzrohr derart anzuordnen, dass er drehgesichert gehalten ist. Dadurch wird gewährleistet, dass der Lagerabschnitt nicht durch die rotierende Antriebswelle mitgedreht wird und einem Verschleiß im Schutzrohr unterliegt.

Der Lagerabschnitt hat eine Abschnittslänge, die deutlich kürzer als das Schutzrohr ist, und sich von einem Ende des Lagerabschnitts zum anderen Ende des Lagerabschnitts bemisst. Bevorzugt hat der Lagerabschnitt eine Abschnittslänge von 10 mm bis 300 mm, zweckmäßig 100 mm bis 200 mm. In einer vorteilhaften Ausführungsform ist eine Abschnittslänge von 150 mm bis 160 mm gewählt.

Der Lagerabschnitt wird bevorzugt als Kunststoffspritzteil ausgeführt, wodurch eine einfache, kostengünstige Fertigung gegeben ist.

Als selbständiger Erfindungsgedanke weist ein Lagerabschnitt einerseits steife Stützelemente und andererseits elastisch ausgebildete Stützelemente auf. Die elastischen und steifen Stützelemente unterscheiden sich hinsichtlich ihrer Steifigkeit, d. h. ihres Widerstandes, den sie einer gleichen Belastung entgegenstellen. Dieselbe Radialkraft bewirkt bei einem elastischen Stützelement eine größere radiale Verformung als bei einem steifen Stützelement. Der Lagerabschnitt kann insbesondere mehr als zwei hinsichtlich ihrer Steifigkeit in Radialrichtung unterschiedliche Stützelemente aufweisen.

In Weiterbildung der Erfindung tragen die Enden eines Lagerabschnitts elastische Stützelemente, wobei zwischen den Enden des Lagerabschnittes zumindest ein steifes Stützelement angeordnet ist. Zweckmäßig sind an einem Ende des Lagerabschnittes ausschließlich elastische Stützelemente vorgesehen. Vorteilhaft sind zwischen den Enden des Lagerabschnittes zumindest zwei steife Stützelemente vorgesehen, und in dem Zwischenraum zwischen den steifen Stützelementen ist zumindest ein elastisches Stützelement angeordnet.

Vorteilhaft sind die elastischen Stützelemente als in Umfangsrichtung der Lagerhülse sich erstreckende Federzungen ausgebildet. Die Breite einer Federzunge ist schmaler, als die in gleicher Richtung gemessene Längserstreckung der Lagerhülse eines Lagerabschnittes und beträgt insbesondere 5% bis 10% der Längserstreckung der Lagerhülse.

Die Lagerhülse, die steifen Stützelemente und die elastischen Stützelemente sind vorteilhaft einteilig ausgebildet. Das steife Stützelement endet auf einem maximalen Außendurchmesser um die Lagerhülse, der kleiner oder gleich dem Innendurchmesser des Schutzrohres ist. Bezogen auf die Längsmittelachse der Lagerhülse liegt das steife Stützelement senkrecht zur Längsmittelachse ausgerichtet. Zweckmäßig liegt ein steifes Stützelement in einer Ebene, zu der die Längsmittelachse der Lagerhülse senkrecht steht.

Über den Umfang der Lagerhülse können mehrere Stützelemente vorgesehen sein, die z. B. als Stützarme gestaltet sind.

Über die Länge der Lagerhülse sind mehrere mit axialem Abstand zueinander liegende Stützelemente angeordnet. Insbesondere folgen unterschiedliche Stützelemente direkt oder indirekt in Längsrichtung aufeinander. Der axiale Abstand aufeinanderfolgender Stützelemente kann gleich sein.

Ein Stützelement ist vorzugsweise als Stützring gestaltet. In zweckmäßiger Ausbildung ist im Außenrand des Stützrings eine Aussparung ausgebildet, über die eine Drehsicherung des Lagerabschnitts im Schutzrohr erzielt ist. Der Stützring kann einen geschlossenen oder einen unterbrochenen Umfang aufweisen.

Zweckmäßig werden ein erster Lagerabschnitt von dem einen axialen Ende des Schutzrohrs und ein zweiter Lagerabschnitt von dem anderen axialen Ende des Schutzrohres in dieses eingeschoben. Die elastischen Stützelemente des von dem einen Ende des Schutzrohrs eingeschobenen ersten Lagerabschnitts werden dabei um einen ersten Winkel entgegen der ersten Einschubrichtung des Lagerabschnitts ausgelenkt. Die elastischen Stützelemente des von dem anderen Ende des Schutzrohres eingeschobenen zweiten Lagerabschnitts werden in einem zweiten Winkel entgegen der zweiten Einschubrichtung des Lagerabschnittes ausgelenkt. Der erste Winkel bildet zum zweiten Winkel bevorzugt einen Wechselwinkel.

Weitere Merkmale der Erfindung ergeben sich aus den weiteren Ansprüchen, der Beschreibung und den Zeichnungen, in der ein nachfolgend im Einzelnen beschriebenes Ausführungsbeispiel der Erfindung dargestellt ist. Es zeigen:
- Fig. 1: in schematischer Darstellung einen von einem Benutzer getragenen Freischneider mit in einem Schutzrohr geführter Antriebswelle,
- Fig. 2: in perspektivischer Darstellung einen Lagerabschnitt zur Anordnung im Schutzrohr des Freischneiders,
- Fig. 3: eine Seitenansicht auf den Lagerabschnitt nach Fig. 2,
- Fig. 4: einen Längsschnitt durch den Lagerabschnitt nach Fig. 3,
- Fig. 5: im Schnitt die Anordnung von Lagerabschnitten in einem Schutzrohr,
- Fig. 6: einen Schnitt durch an den Enden ineinandergreifende Lagerabschnitte,
- Fig. 7: einen Schnitt durch über ein Abstandselement gegeneinander abgestützte Lagerabschnitte,
- Fig. 8: in schematischer Darstellung eine Anordnung von mehreren Lagerabschnitten in einem Schutzrohr,
- Fig. 9: eine Anordnung von Lagerabschnitten in einem Schutzrohr, wobei die Lagerabschnitte über Abstandselemente gegeneinander abgestützt sind,
- Fig. 10: eine Anordnung von Lagerabschnitten mit Abstandselementen, die mehrfach länger als ein Lagerabschnitt ausgebildet sind,
- Fig. 11: einen Schnitt durch den Lagerabschnitt längs der Linie XI-XI in Fig. 4,
- Fig. 12: eine Draufsicht auf ein Ende des Lagerabschnittes in Pfeilrichtung XII in Fig. 2,
- Fig. 13: einen Schnitt durch ein Schutzrohr in Höhe eines Lagerabschnittes mit elliptischen Stützelementen,
- Fig. 14: einen Schnitt durch ein Schutzrohr in Höhe eines Lagerabschnittes mit kreisförmigen Stützelementen,
- Fig. 15: einen Schnitt durch ein Schutzrohr in Höhe eines Lagerabschnittes mit als radiale Stützarme ausgebildeten Stützelementen,
- Fig. 16: einen schematischen Schnitt durch die volle Länge eines Schutzrohres mit einer Anordnung von Lagerrohrsegmenten gemäß Fig. 8,
- Fig. 17: einen schematischen Schnitt durch die volle Länge eines Schutzrohres mit einer Anordnung von Lagerrohrsegmenten gemäß Fig. 9,
- Fig. 18: einen schematischen Schnitt durch die volle Länge eines Schutzrohres mit einer Anordnung von Lagerrohrsegmenten gemäß Fig. 10,
- Fig. 19: in schematischer Darstellung die Anordnung von Lagerrohrsegmenten in Form von Lagerabschnitten in einem gebogenen Schutzrohr,
- Fig. 20: in perspektivischer Darstellung ein weiteres Ausführungsbeispiel eines Lagerabschnittes,
- Fig. 21: eine Seitenansicht des Lagerabschnittes nach Fig. 20,
- Fig. 22: einen Schnitt durch den Lagerabschnitt längs der Linie XXII-XXII in Fig. 21,
- Fig. 23: eine Draufsicht auf eine Stirnseite des Lagerabschnittes nach Fig. 20,
- Fig. 24: eine Ansicht auf eine Stirnseite eines in einem Schutzrohr angeordneten Lagerabschnittes,
- Fig. 25: eine Schnittdarstellung gemäß Fig. 22 durch einen in einem Schutzrohr angeordneten Lagerabschnitt,
- Fig. 26: eine Ansicht auf eine Stirnseite eines in einem Schutzrohr angeordneten Lagerabschnittes mit Angabe einer Schnittlinie XXVII in Fig. 26,
- Fig. 27: einen außerhalb der Längsmittelachse geführten Längsschnitt durch das Schutzrohr mit einem Lagerabschnitt längs der Linie XXVII-XXVII in Fig. 26,
- Fig. 28: eine Seitenansicht eines Lagerabschnittes in einer weiteren Ausführungsform mit gleichen benachbarten Stützelementen,
- Fig. 29: eine Seitenansicht eines Lagerabschnittes in einer weiteren Ausführungsform mit einer größeren Anzahl an Stützelementen.

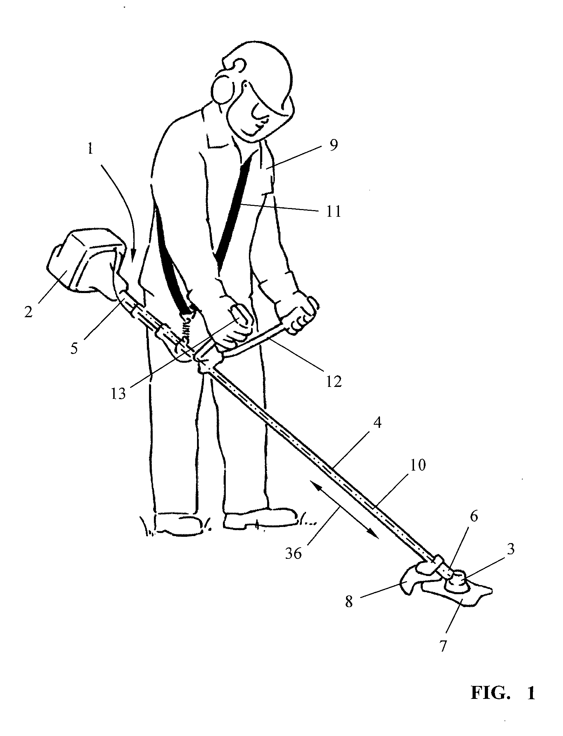

Das in Fig. 1 dargestellte Arbeitsgerät ist ein Freischneider 1, der im Wesentlichen aus einem Antrieb 2, einem Werkzeugkopf 3 und einem Schutzrohr 4 besteht. Der Freischneider 1 ist ein Beispiel eines Arbeitsgerätes mit einem Schutzrohr 4; das Arbeitsgerät kann auch ein Hochentaster, ein Spezialernter, eine Heckenschere oder dgl. sein.

Der Antrieb 2 ist an einem Ende 5 des Schutzrohres 4 befestigt, während der Werkzeugkopf 3 an einem anderen Ende 6 des Schutzrohres 4 montiert ist. Im gezeigten Ausführungsbeispiel trägt der Werkzeugkopf 3 ein Werkzeug 7 nach Art eines Dickichtmessers; als Werkzeug können auch mehrflüglige Messer, Fadenschneider oder dgl. montiert sein. Zum Schutz des Benutzers 9 ist im Bereich des unteren Endes 6 am Schutzrohr 4 ein Prallschutz 8 gehalten.

Im gezeigten Ausführungsbeispiel wird der Freischneider 1 mit einem Gurt 11 vom Benutzer 9 getragen; ein am Schutzrohr 4 befestigter Griff 12, im Ausführungsbeispiel ein Lenkergriff, dient dem Halten und Führen des Freischneiders 1 durch den Benutzer 9. In zumindest einem Griff 12 des Lenkergriffs sind Bedienungselemente für den Antrieb 2 vorgesehen. Der Antrieb 2 kann als Elektromotor, Zweitaktmotor, Viertaktmotor oder dgl. Antriebsmotor ausgebildet sein.

Über eine in dem Schutzrohr 4 geführte Antriebswelle 10 wird das Werkzeug 7, im Ausführungsbeispiel ein Messerblatt, vom Antrieb 2 rotierend angetrieben.

Innerhalb des Schutzrohres 4 ist die Antriebswelle 10 gelagert, damit diese laufruhig die Antriebskraft des Antriebs 2 auf den Werkzeugkopf 3 übertragen kann.

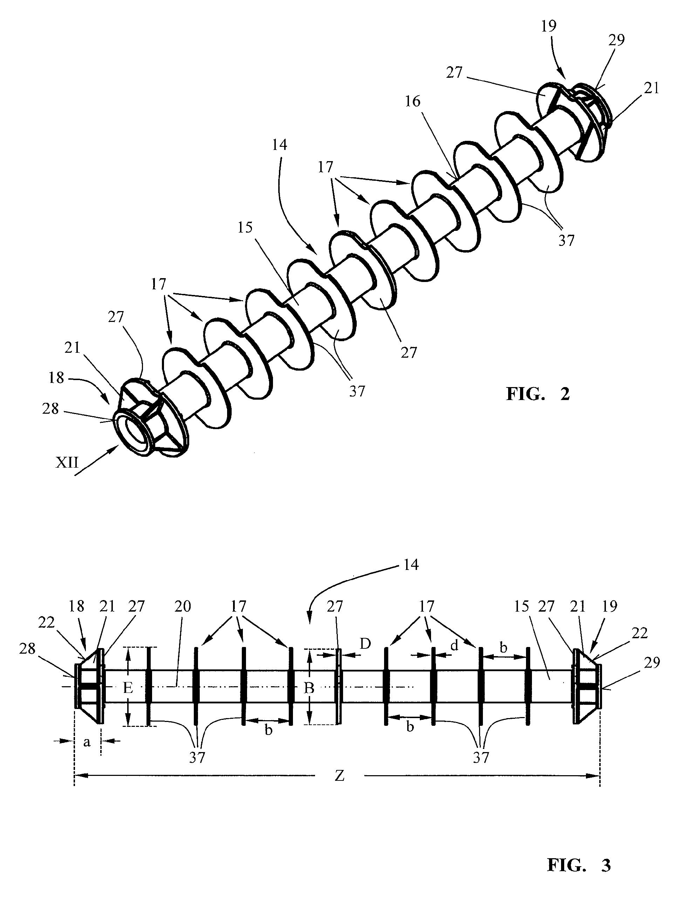

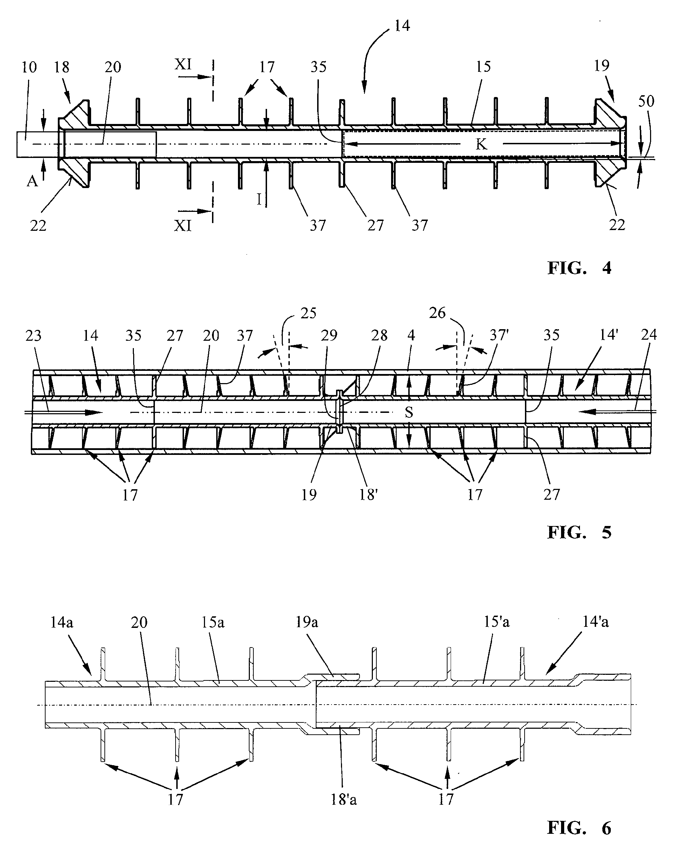

Innerhalb des Schutzrohrs 4 ist zumindest ein Lagerabschnitt 14 angeordnet, wobei in Längsrichtung 36 des Schutzrohres 4 mehrere Lagerabschnitte 14 hintereinander liegen und von der Antriebswelle 10 durchragt sind (beispielhaft die Figuren 5, 8 bis 10, 16 bis 19). Ein in den Figuren 2 bis 4 dargestellter Lagerabschnitt 14 besteht im Wesentlichen aus einer zentralen Lagerhülse 15, auf deren Außenumfang 16 radial abstehende Stützelemente 17 angeordnet sind. Die Lagerhülse 15 und die Stützelemente 17 sind vorzugsweise einteilig ausgebildet.

Die Lagerhülse 15 weist einen Innendurchmesser I (Fig. 4) auf, der dem Außendurchmesser A (Fig. 4) der Antriebswelle 10 angepasst ist.

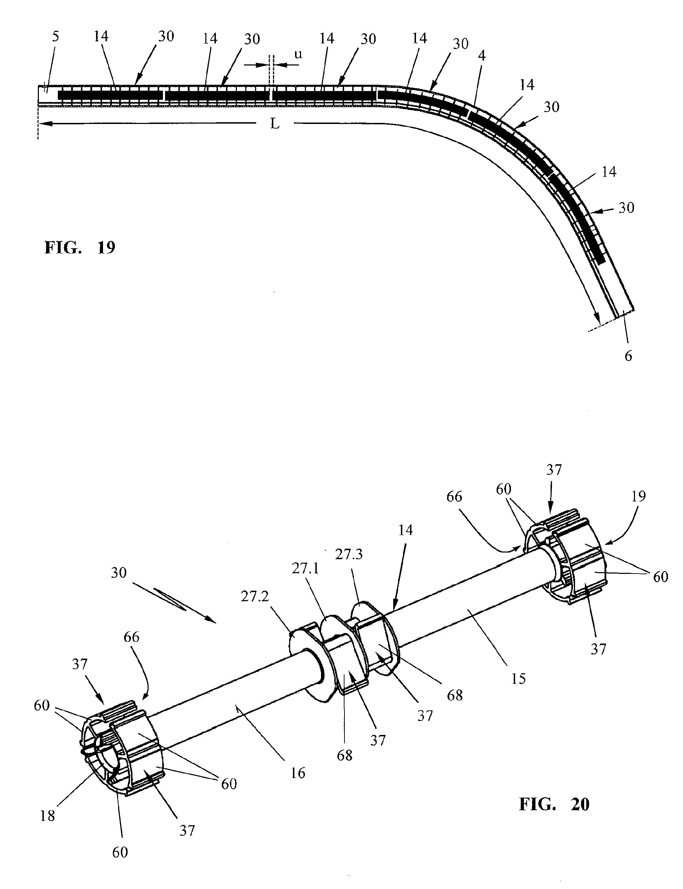

Die Stützelemente 17 des Lagerabschnitts 14 bestehen aus steifen Stützelementen 27 und/oder elastischen Stützelementen 37. Die Form der steifen Stützelemente 27 und der elastischen Stützelemente 37 kann vorteilhaft gleich sein, wie in den Darstellungen der Figuren 2 bis 5 wiedergegeben. Die Stützelemente 17 können auch unterschiedliche Form und Materialstärke haben, wie beispielhaft im Ausführungsbeispiel nach den Fig. 20 bis 29 gezeigt. Zweckmäßig haben die Stützelemente 27, 37 eine gleiche Gestalt; vorteilhaft sind die Stützelemente 27, 37 ringförmig, kreisförmig, kreissegmentförmig oder dgl. In besonderer Ausbildung haben die steifen Stützelemente 27 eine Dicke D, die vorzugsweise stärker ist als die Dicke d der elastischen Stützelemente 37. Wie z. B. Fig. 3 zeigt, hat das steife Stützelement 27 einen maximalen Außendurchmesser B, der kleiner oder gleich dem Innendurchmesser S (Fig. 5) des Schutzrohres 4 ist. Bevorzugt endet das steife Stützelement 27 auf einem maximalen Außendurchmesser B um die Lagerhülse 15, der kleiner oder gleich dem Innendurchmesser S (Fig. 5) des Schutzrohres 4 ist.

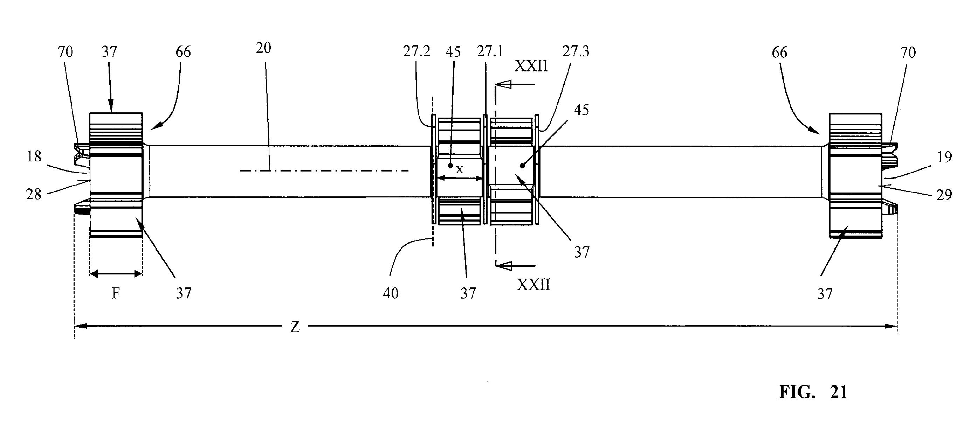

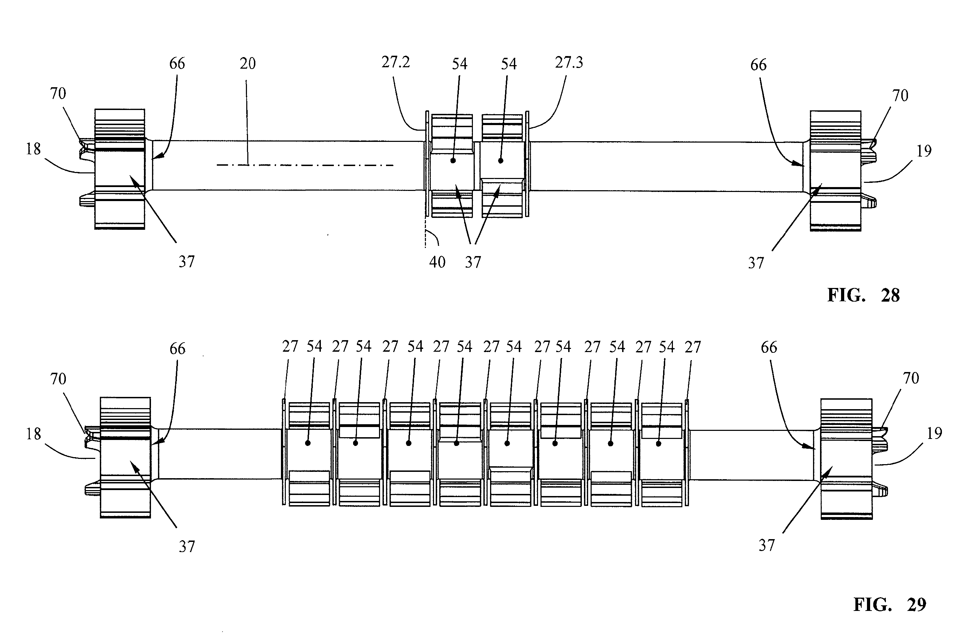

Wie Fig. 3 zeigt, liegt das steife Stützelement 27 senkrecht zur Längsmittelachse 20 (Fig. 3). Das steife Stützelement 27 ist insbesondere als ringscheibenförmige Rippe ausgebildet, die in Umfangsrichtung der Lagerhülse 15 verläuft. Die Rippe liegt in einer Ebene 40 (Figuren 21, 28), auf der die Längsmittelachse 20 der Lagerhülse 15 senkrecht steht. Das steife Stützelement 27 bildet eine Ebene 40, auf der die Längsmittelachse 20 der Lagerhülse 15 lotrecht steht. Wie die Figuren 2 bis 4 zeigen, weist die Lagerhülse 15 ein erstes Ende 18 und ein zweites Ende 19 auf. Ein erstes steifes Stützelement 27 liegt zwischen den Enden 18, 19 der Lagerhülse 15. Im gezeigten Ausführungsbeispiel liegt das steife Stützelement 27 auf halber Abschnittslänge Z des Lagerabschnitts 14. Andere Anordnungen auf dem Lagerabschnitt 14 bzw. der Lagerhülse 15 können zweckmäßig sein.

Im gezeigten Ausführungsbeispiel nach den Fig. 2 bis 10 ist im Bereich der Enden 18, 19 jeweils ein weiteres steifes Stützelement 27 vorgesehen. Dabei liegt das steife Stützelement 27 mit Abstand a zur Stirnseite 28, 29 der Lagerhülse 15 bzw. des Lagerabschnitts 14. Zwischen dem Ende 18, 19 der Lagerhülse 15 und dem steifen Stützelement 27 am Ende 18, 19 der Lagerhülse 15 ist ein Einfädelelement 21 ausgebildet, dessen Außenkontur 22 vom Ende 18, 19 der Lagerhülse 15 zum steifen Stützelement 27 ansteigt. Wie den Figuren 2 bis 4 zu entnehmen, ist das Einfädelelement 21 als in der Seitenansicht dreieckige Rippe gestaltet.

Zwischen den steifen Stützelementen 27 sind vorteilhaft elastische Stützelemente 37 vorgesehen. Es kann zweckmäßig sein, einen Lagerabschnitt 14 ausschließlich mit elastischen Stützelementen 37 gleicher oder verschiedener Form zu versehen. Wie Fig. 3 zeigt, enden die elastischen Stützelemente 37 auf einem maximalen Außendurchmesser E um die Lagerhülse 15. Der Außendurchmesser E ist geringfügig größer als der Innendurchmesser S (Fig. 5) des Schutzrohres 4. Mit geringfügig größer ist ein um 0,5% bis 5% größerer Außendurchmesser E des elastischen Stützelementes 37 als der Innendurchmesser S des Schutzrohres 4 zum Ausdruck gebracht.

Wie Fig. 3 zeigt, liegen zwischen den an den Enden 18 und 19 angeordneten steifen Stützelementen 27 und dem mittleren Stützelement 27 jeweils vier elastische Stützelemente 37. Insbesondere liegen die Stützelemente 27, 37 in Längsrichtung 36 der Längsmittelachse 20 mit gleichem Axialabstand b zueinander. Variable Axialabstände b können vorteilhaft sein; z. B. können die Abstände b der auftretenden Belastung angepasst gewählt werden.

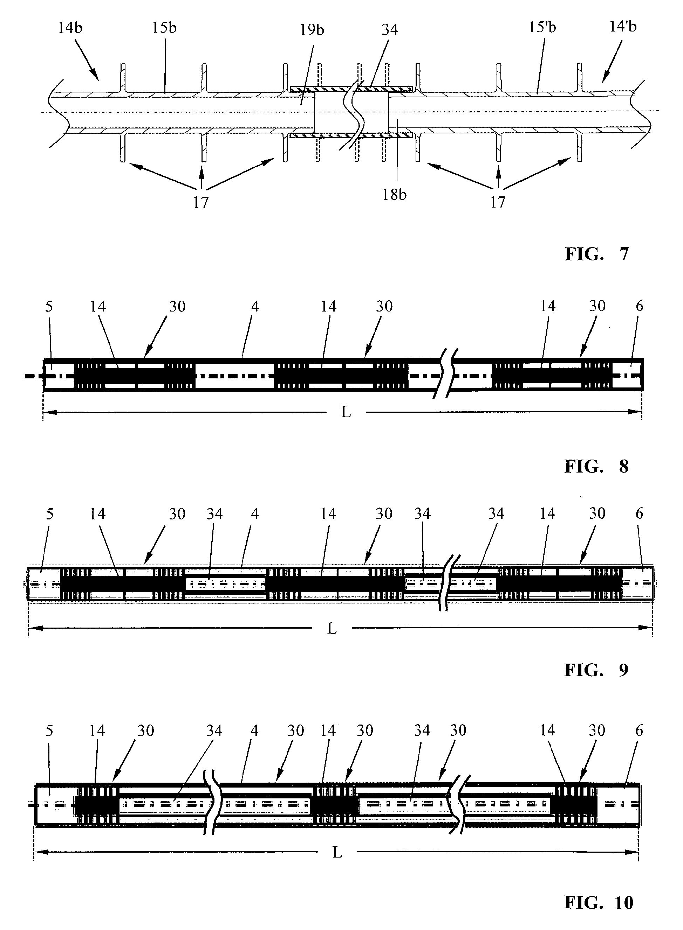

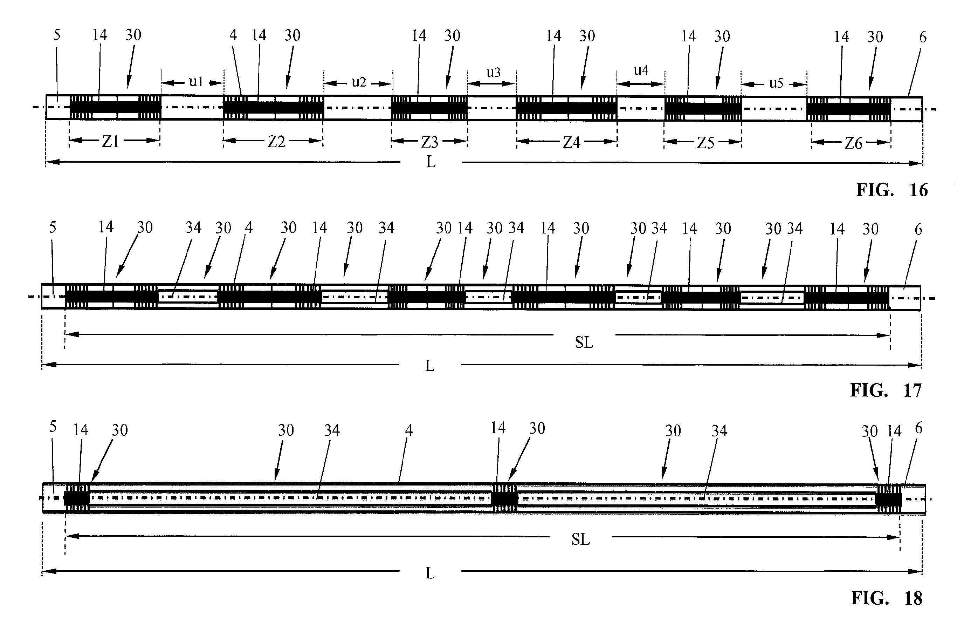

Die zur Lagerung der Antriebswelle 10 in ein Schutzrohr 4 eingeschobenen Lagerabschnitte 14 und ggf. angeordnete Abstandselemente 34 werden allgemein auch als Lagerrohrsegmente 30 bezeichnet. Nach der Erfindung werden in das Schutzrohr 4 von dem einen Ende oder dem anderen Ende des Schutzrohrs 4 ausgehend Lagerrohrsegmente 30 eingeschoben. Ein derartiges Lagerrohrsegment 30 kann - wie die Figuren 2 bis 4 zeigen - als Lagerabschnitt 14 ausgebildet sein oder - vgl. die Figuren 7, 9 und 10 - als Abstandselement 34 vorgesehen sein. Im Schutzrohr 4 sind mehrere aufeinanderfolgende Lagerrohrsegmente 30 aufgenommen, wobei nach der Erfindung eine bestimmte Füllung des Schutzrohres 4 vorgesehen ist. Die Lagerrohrsegmente 30, zumindest mehrere Lagerabschnitte 14, füllen das Schutzrohr über mehr als 60% seiner Länge. Sind auch Abstandselemente 34 als Lagerrohrsegmente 30 vorgesehen, füllen die Lagerabschnitte 14 und die Abstandselemente 34 das Schutzrohr 4 über mehr als 60% seiner Länge L. In anderen Worten ausgedrückt ist die summierte Länge SL der in einem Schutzrohr 4 angeordneten Lagerrohrsegmente 30 größer als 60% der Länge L des Schutzrohres 4 (Fig. 16 bis 18).

In einem ersten Ausführungsbeispiel gemäß Fig. 5 kann die Füllung des Schutzrohres 4 über mehr als 60% ausschließlich mit Lagerabschnitten 14 erfolgen. Dabei können die Stirnseiten 28, 29 aufeinanderfolgender Lagerabschnitte 14 an ihren Enden 18 und 19 aneinander anliegen. Vorteilhaft ist es, den einen Lagerabschnitt 14 von dem einen axialen Ende des Schutzrohres 4 in Pfeilrichtung 23 in das Schutzrohr 4 einzuschieben und den anderen Lagerabschnitt 14' von dem anderen axialen Ende des Schutzrohres in Pfeilrichtung 24 in das Schutzrohr 4 einzuschieben. Aufgrund des Übermaßes der elastischen Stützelemente 37 werden die Stützelemente 37 des Lagerabschnitts 14 um einen Winkel 25 entgegen der Einschubrichtung 23 ausgelenkt; entsprechend werden die elastischen Stützelemente 37' des Lagerabschnitts 14' entgegen der Einschubrichtung 24 um einen Winkel 26 ausgelenkt. Somit liegen die elastischen Stützelemente 37 des von dem einen Ende 5 des Schutzrohrs 4 in Einschubrichtung 23 eingeschobenen Lagerabschnitts 14 in einem ersten Winkel 25 zur ersten Einschubrichtung 23 des Lagerabschnitts 14; die elastischen Stützelemente 37' der von dem anderen Ende 6 des Schutzrohres 4 in Einschubrichtung 24 eingeschobenen Lagerabschnitte 14' liegen in einem zweiten Winkel 26 zur zweiten Einschubrichtung 24 des Lagerabschnittes.

In einer weiteren Ausführungsform der Lagerrohrsegmente 30 sind deren Enden unterschiedlich ausgebildet, z. B. zur Bildung einer zusammenhängenden Lageranordnung durch teilweises Ineinanderschieben. Am Beispiel der Lagerabschnitte 14a nach Fig. 6 ist das eine Ende 19a zu einer Aufnahmemuffe derart erweitert, dass das zugewandte Ende 18'a eines folgenden Lagerabschnitts 14'a in der Aufnahmemuffe aufgenommen wird. Die Lagerhülsen 15a, 15'a der Lagerabschnitte 14a, 14'a greifen an ihren Enden ineinander und bilden ein zusammengesetztes Lagerrohr. Entsprechend können auch die Abstandselemente 34 gestaltet sein. Dadurch können die Lagerrohrsegmente 30, nämlich Lagerabschnitte 14 und/oder Abstandselemente 34, vor Einschieben in das Schutzrohr 4 zu einer zusammenhängenden Einheit (Lageranordnung) vormontiert werden. Die Ausbildung eines Lagerrohrsegments 30 kann so vorgesehen sein, dass dessen Enden gleich ausgebildet sind (vgl. z. B. die Enden 18, 19 der Lagerabschnitte 14 in den Fig. 2 bis 4). So können zweckmäßig mehrere Lagerrohrsegmente 30 aneinandergereiht werden, indem ein folgender Lagerabschnitt 14 und/oder ein Abstandselement 34 an seinen Enden mit z. B. größerem Durchmesser ausgebildet ist. Aufeinanderfolgende Lagerrohrsegmente 30 können durch Ineinanderstecken miteinander verbunden werden. Die Montage oder Vormontage der Lagerrohrsegmente 30 ist erleichtert, da das einzelne Lagerrohrsegment 30 zur Montage keine vorgegebene Orientierung hat.

Im Ausführungsbeispiel nach Fig. 7 sind am Beispiel von Lagerabschnitten 14b, 14'b die Enden 18b und 19b der Lagerrohrsegmente 30 gleich ausgebildet; die Lagerhülsen 15b, 15'b der Lagerabschnitte 14b, 14'b enden mit gleichem Durchmesser; die Enden sind gleich ausgebildet. Zur Abstützung der Lagerabschnitte 14b, 14'b gegeneinander sind z. B. Lagerrohrsegmente 30 als Abstandselemente 34 vorgesehen, die nach Art einer Verbindungsmuffe gestaltet sind. Die Enden 18b und 19b aufeinanderfolgender Lagerabschnitte 14b, 14'b werden in das Abstandselement 34 eingeschoben; die auf den Lagerabschnitten 14b, 14'b angeordneten ersten Stützelemente 17 begrenzen die Einschubtiefe der Enden 18b und 19b in das Abstandselement 34. Das in Fig. 7 gezeigte Abstandselement 34 ist ohne Stützelemente ausgebildet; es kann zweckmäßig sein, das Abstandselement 34 auch als Lagerabschnitt zu gestalten, indem auf dem Außenumfang des Abstandselementes 34 Stützelemente 27 und/oder 37 angeordnet werden, wie in Fig. 7 strichliert angedeutet ist.

Im Ausführungsbeispiel nach Fig. 8 sind im Schutzrohr 4 als Lagerrohrsegmente 30 ausschließlich Lagerabschnitte 14 vorgesehen; der über die Länge des Schutzrohres 4 vorgesehene Füllungsgrad mit Lagerabschnitten 14 beträgt mehr als 60% der Länge L des Schutzrohres 4. Wie Fig. 16 zeigt, sind zwischen den Lagerabschnitten 14 Abstände u1, u2, u3, u4 und u5 unterschiedlicher Länge vorgesehen. Die Lagerrohrsegmente 30 sind ausschließlich durch Lagerabschnitte 14 gebildet, wobei mehrere Lagerabschnitte 14 unmittelbar aneinander anliegen können (Fig. 5) und eine erste Gruppe von mehreren Lagerabschnitten bilden, die zu einer zweiten Gruppe von mehreren Lagerabschnitten mit Abstand liegt. Die Lagerabschnitte 14 können gleiche Abschnittslänge Z haben. Im Ausführungsbeispiel nach Fig. 16 sind die Lagerabschnitte 14 mit unterschiedlichen Abschnittslängen Z1, Z2, Z3, Z4, Z5 und Z6 ausgebildet. Die Abschnittslängen Z1 bis Z6 sowie die Abstände u1 bis u5 der Lagerabschnitte 14 voneinander können den mechanischen stationären und/oder dynamischen Belastungen entsprechend gewählt werden. Dadurch ergibt sich eine große Variabilität, wodurch eine belastungsangepasste Lageranordnung für die Antriebswelle 10 im Schutzrohr 4 gestaltet werden kann.

Das Schutzrohr 4 hat eine Länge L; die aufsummierten Abschnittslängen Z1, Z2, Z3, Z4, Z5 und Z6 sind größer als 60% der Länge L des Schutzrohres 4.

In Fig. 9 sind in Längsrichtung 36 des Schutzrohres 4 aufeinanderfolgende Lagerrohrsegmente 30 angeordnet, wobei die Lagerrohrsegmente 30 aus Lagerabschnitten 14 und Abstandselementen 34 bestehen. Wie Fig. 9 zeigt, ist an jedem Ende eines Abstandselementes 34 ein Lagerabschnitt 14 vorgesehen. Es können mehrere Lagerabschnitte 14 unmittelbar aufeinander folgen, wie z. B. in Fig. 5 dargestellt. Wie sich aus der dargestellten Gesamtlänge L des Schutzrohres 4 in Fig. 17 ergibt, können Lagerabschnitte 14 und Abstandselemente 34 einander vorteilhaft abwechseln.

Die Gesamtdarstellung des Schutzrohres 4 zeigt, dass nicht nur die Lagerabschnitte 14 unterschiedliche Abschnittslängen haben können (vgl. Fig. 16); auch die Abstandselemente 34 können unterschiedliche axiale Längen aufweisen. Die aufsummierte Länge SL der Abstandselemente 34 und der Lagerabschnitte 14 ist größer als 60% der Länge L des Schutzrohrs 4. In anderen Worten ausgedrückt, ist der Füllungsgrad über die Länge L des Schutzrohres 4 mit Lagerrohrsegmenten 30 größer als 60%.

Im Ausführungsbeispiel nach Fig. 9 sind die Lagerabschnitte 14 etwa gleich lang oder länger ausgebildet als die Abstandselemente 34; dies ist eine von verschiedenen möglichen Ausbildungen.

Im Ausführungsbeispiel nach Fig. 10 ist eine Gestaltung getroffen, bei der die Abstandselemente 34 länger, insbesondere mehrfach länger ausgebildet sind wie die Lagerabschnitte 14.

In Fig. 18 ist die Füllung des Schutzrohres 4 gezeigt, die über seine Länge so gewählt ist, dass mehr als 60% der Länge L des Schutzrohres 4 mit Lagerabschnitten 14 und Abstandselementen 34 gefüllt ist. Über die Länge L des Schutzrohrs 4 sind im gezeigten Ausführungsbeispiel drei Lagerabschnitte 14 angeordnet, zwischen denen jeweils ein Abstandselement 34 angeordnet ist. Die Abstandselemente 34 stützen die Lagerabschnitte 14 gegeneinander ab; die summierte Länge SL der Lagerabschnitte 14 zusammen mit der Länge der Abstandselemente 34 ist größer als 60% der Länge L des Schutzrohres 4. Im Ausführungsbeispiel nach Fig. 18 beträgt die summierte Länge SL etwa 90% bis 95% der Länge L des Schutzrohrs 4.

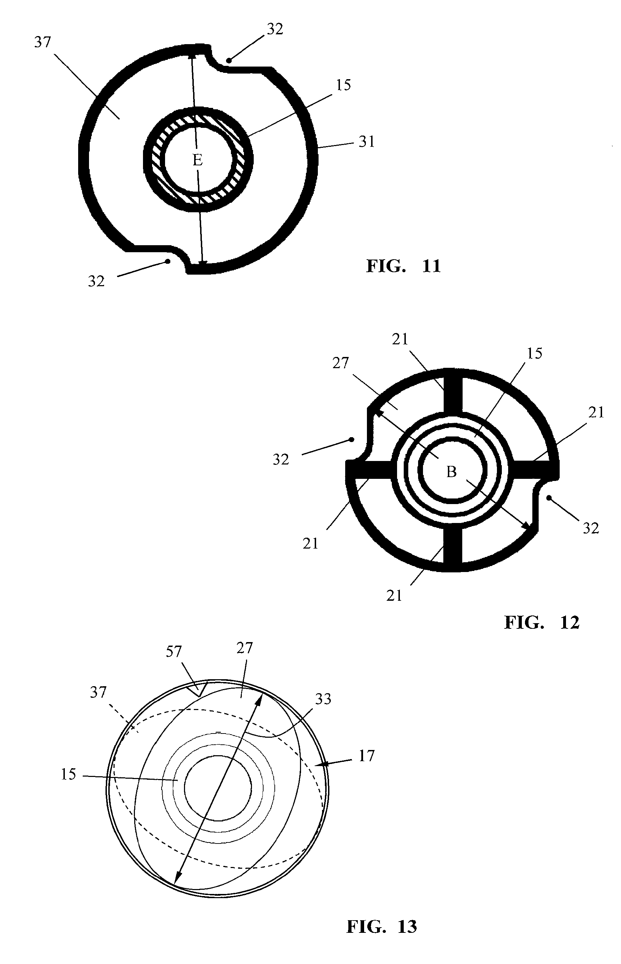

Die Lagerabschnitte 14, 14a, 14b sind im Schutzrohr 4 drehgesichert gehalten. Vorteilhaft ist entsprechend den Fig. 11, 12 und 14 vorgesehen, die Stützelemente 17, d. h. die steifen Stützelemente 27 und/oder die elastischen Stützelemente 37, als Kreisringe auszubilden, wobei im Außenrand 31 eines Kreisrings zumindest eine Einkerbung 32 ausgebildet ist. Die Einkerbungen 32 können, wie Fig. 11 zeigt, einander diametral gegenüber liegen. Eine Einkerbung 32 wirkt mit einer inneren Längswulst 57 des Schutzrohres 4 zusammen, die aufgrund des Herstellungsverfahrens des Schutzrohres 4 gegeben ist. Das Schutzrohr 4 kann z. B. als geschweißtes Rohr, als gezogenes Rohr oder dgl. hergestellt sein.

Es kann ausreichend sein, ausschließlich die steifen Stützelemente 27 mit Einkerbungen 32 zu versehen, wie in Fig. 12 dargestellt. Vorteilhaft sind die kreisringförmigen steifen Stützelemente 27 und die kreisringförmigen elastischen Stützelemente 37 mit Einkerbungen 32 versehen.

Alternative Gestaltungen der Stützelemente 17 können vorteilhaft sein. So zeigt Fig. 13 elliptisch ausgebildete Stützelemente 17, die sowohl als steife Stützelemente 27 und/oder als elastische Stützelemente 37 vorgesehen sein können. Die elliptischen Stützelemente 17 weisen eine große Halbachse 33 auf, die als elastisches Stützelement entsprechend dem Außendurchmesser E in Fig. 3 oder als steifes Stützelement entsprechend dem Außendurchmesser B ausgelegt ist. Es kann vorteilhaft sein, die elliptischen Stützelemente 17 zueinander verdreht anzuordnen, wie strichliert in Fig. 13 angedeutet ist. Das elliptische Stützelement 17 ist durch die Längswulst 57 am Innenumfang des Schutzrohres 4 gegen Drehen gesichert.

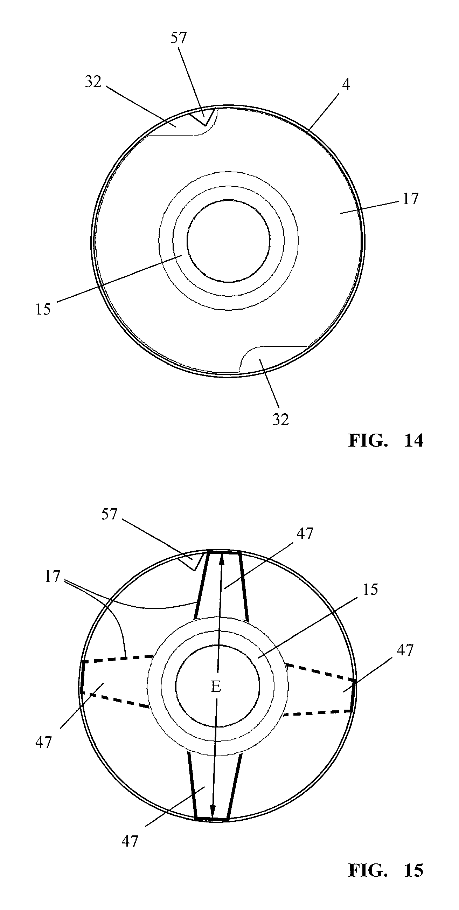

In einer alternativen Ausführungsform nach Fig. 15 sind die Stützelemente 17 als Stützarme 47 ausgebildet. Jeweils zwei Stützarme 47 liegen einander diametral gegenüber, wobei über den Umfang der Lagerhülse 15 vier Stützarme 47 angeordnet sein können. Die Stützarme 47 enden auf einem maximalen Außendurchmesser E, der um 0,5% bis 5% größer ist als der Innendurchmesser S des Schutzrohres 4 (Fig. 5). Die Stützarme 47 können als steife und/oder elastische Stützelemente 27, 37 ausgebildet sein. Es kann zweckmäßig sein, die in Längsrichtung der Lagerhülse 15 benachbarten Stützarme 47 in Umfangsrichtung versetzt zueinander anzuordnen, wie in Fig. 15 strichliert angedeutet ist.

Der Lagerabschnitt 14 aus der Lagerhülse 15 und den Stützelementen 17 ist einteilig als Kunststoffspritzteil gefertigt. Der Lagerabschnitt 14 hat eine Abschnittslänge Z im Bereich von 10 mm bis 300 mm, bevorzugt 100 mm bis 200 mm, insbesondere 150 mm. Die Abschnittslänge Z beim Spritzgießen des Lagerabschnitts 14 ist begrenzt durch die Länge K der Ziehkerne beim Spritzgießen. Werden zwei Ziehkerne verwendet, die vorzugsweise etwa in der Mitte der Lagerhülse 15 aneinander stoßen, ergibt sich - wie Fig. 4 zeigt - beim Spritzgießen eine Stoßfuge, die als umlaufende Innennaht 35 dargestellt ist und die die Lagereigenschaften der Lagerhülse 15 nicht beeinflusst.

In den Figuren 1 und 8 bis 10 sind gerade Schutzrohre der Länge L gezeigt. Die Länge eines Schutzrohrs 4 kann im Bereich von 800 mm bis 1.500 mm liegen, wobei der Querschnitt des Schutzrohres 4 bevorzugt rund ist. Von einem runden Querschnitt abweichende Querschnittsformen für ein Schutzrohr 4 können vorteilhaft sein.

Das Schutzrohr 4 kann auch gebogen ausgeführt sein, wie Fig. 19 zeigt. Die Lagerabschnitte 14 und/oder die Abstandselemente 34 können über ihre Abschnittslänge Z oder einen Teil ihrer Abschnittslänge Z elastisch zu biegen sein, so dass z. B. ein Lagerabschnitt 14 der Krümmung des Schutzrohres 4 entsprechend gebogen ist. Bei großen Krümmungsradien des Schutzrohres 4 können auch kurze, steife Lagerabschnitte 14 verwendet werden, die sich über ihre elastischen Stützelemente 37 im Schutzrohr 4 und zur Antriebswelle 10 ausrichten. Im Ausführungsbeispiel nach Fig. 16 ist das Schutzrohr 4 über mehr als 60% seiner Länge L mit Lagerabschnitten 14 gefüllt. Die Summe der Abschnittslängen Z der Lagerabschnitte 14 ist dabei größer als 60% der Länge L des Schutzrohres 4. Die Lagerabschnitte 14 können stirnseitig aneinander anliegen. In Fig. 16 ist ein geringer Abstand u zwischen benachbarten Lagerabschnitten 14 vorgesehen.

Wie in Fig. 4 gezeigt, kann sich der Innendurchmesser I der Lagerhülse 15 zu den Enden 18, 19 hin erweitern. Der Innendurchmesser I der Lagerhülse 15 ist somit am jeweiligen Ende 18, 19 der Lagerhülse 15 größer als im Bereich der Mitte der Lagerhülse 15, insbesondere auf Höhe der Innennaht 35. Bei einer Herstellung durch Spritzgießen werden vorteilhaft Entformungsschrägen vorgesehen, so dass sich der Innendurchmesser I der Lagerhülse 15 über ihre Länge ändert. Zur gezielten Steifigkeitsabstimmung der Lagerhülse 15 sind an den Enden der Lagerhülse 15 vorteilhaft andere Stützelemente 37 angeordnet als die im mittleren Bereich der Lagerhülse 15 vorgesehenen Stützelemente 27, auf deren Höhe der Innendurchmesser verringert ist.

Ausgehend von der Innennaht 35 bzw. der Mitte des Lagerabschnitts 14 erweitert sich der Innendurchmesser I um einen Winkel 50 von etwa 0,01° bis 1°, vorzugsweise 0,02° bis 0,1°. Dadurch ergibt sich an den Enden 18, 19 der Lagerhülse 15 eine Durchmessererweiterung.

Bei einem Spritzgussverfahren mit einem einheitlichen Material ist gemäß dem Ausführungsbeispiel vorgesehen, zur Bereitstellung von elastischen Stützelementen 37 diese mit einer dünneren Materialstärke auszubilden als die steifen Stützelemente 27. Wird der Lagerabschnitt 14 in Mehrkomponentenverfahren gegossen, können für die elastischen Stützelemente andere Materialien verwendet werden wie für die übrigen Abschnitte des Lagerabschnitts. Dadurch kann z. B. eine gleiche Materialstärke bei allen Stützelementen vorgesehen sein; aufgrund von unterschiedlichen Materialeigenschaften wird dann die notwendige Elastizität bereitgestellt.

Die Figuren 20 bis 29 zeigen weitere Ausführungsbeispiele von als Lagerabschnitten 14 ausgebildeten Lagerrohrsegmenten 30. Die zu der Ausbildung und Gestaltung der Stützelemente 17 (steife Stützelemente 27, elastische Stützelemente 37) vorstehend zu den Fig. 1 bis 19 gemachten Ausführungen gelten entsprechend auch für die Ausführungsbeispiele der Fig. 20 bis 29. In gleicher Weise sind die nachstehend gemachten Ausführungen auch auf die Ausführungsbeispiele der Fig. 1 bis 19 anwendbar. Die zu den verschiedenen Ausführungsbeispielen gemachten Ausführungen sind untereinander kombinierbar und von einem Ausführungsbeispiel auf ein anderes Ausführungsbeispiel übertragbar.

In den Figuren 20 bis 29 sind weitere Ausführungsbeispiele eines Lagerabschnitts 14 zur Bildung eines Lagerrohres wiedergegeben. Gleiche Teile sind mit gleichen Bezugszeichen versehen.

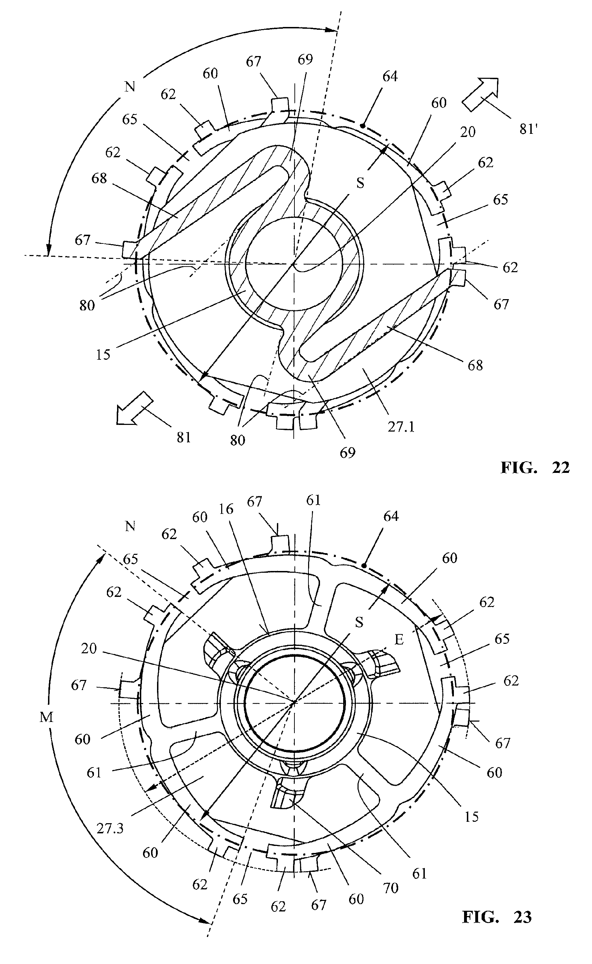

Das Lagerrohr in der Darstellung nach den Figuren 20 und 21 besteht im Wesentlichen aus der Lagerhülse 15 und am Außenumfang der Lagerhülse 15 angeordneten Stützelementen 17. An den Enden 18, 19 der Lagerhülse 15 sind elastische Stützelemente 37 vorgesehen, die als Federzunge 60 gestaltet sind. Eine Federzunge 60 erstreckt sich, wie Fig. 23 zeigt, in Umfangsrichtung der Lagerhülse 15, wobei vorteilhaft zwei Federzungen 60 von einer Tragrippe 61 gehalten sind. Die beiden Federzungen 60 und die Tragrippe bilden in der Ansicht nach Fig. 23 ein T. Über den Umfang der Lagerhülse 15 sind drei Tragrippen 61 mit jeweils zwei Federzungen 60 vorgesehen.

Es kann auch eine andere Anzahl an Tragrippen 61 und/oder Federzungen 60 pro Tragrippe 61 vorgesehen sein. Die Tragrippen 61 können gleichmäßig oder auch ungleichmäßig über den Umfang der Lagerhülse 15 verteilt sein, so dass sich zwischen benachbarten Tragrippen 61 gleiche oder ungleiche Umfangswinkel ergeben können. Bei einer unrunden Form des Schutzrohres 4 kann ein ungleicher Umfangswinkel vorteilhaft sein.

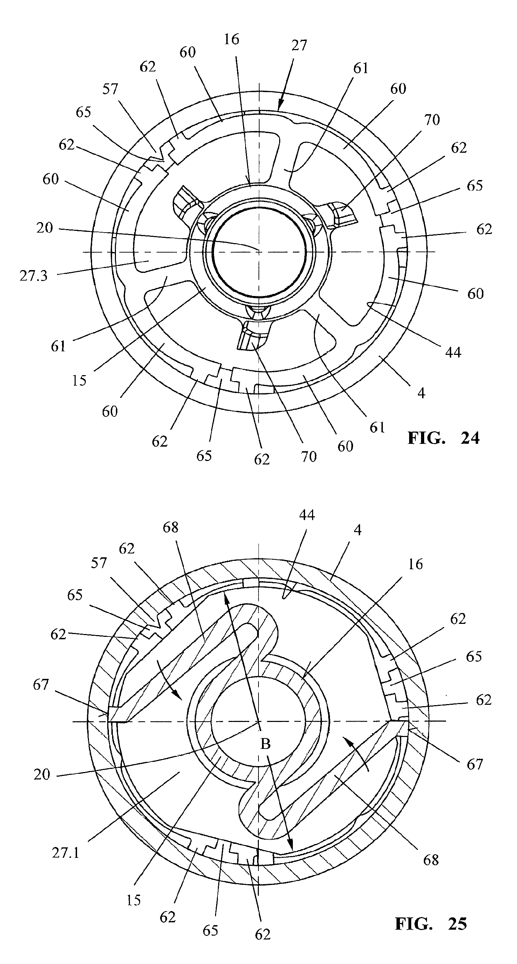

Jede Federzunge 60 trägt in ihrem freien Ende einen Anlageabschnitt 62, mit dem die Federzunge - wie Fig. 24 zeigt - am Innenumfang 44 des Schutzrohres 4 anliegt. Die Anlageabschnitte 62 enden auf einem Durchmesserkreis E, wie er auch zu den vorhergehenden Ausführungsbeispielen (z. B. Fig. 3) angegeben ist.

Im unverformten Zustand gemäß Fig. 23 ragen die Anlageabschnitte 62 über einen Durchmesserkreis 64 hinaus, der dem Innendurchmesser S des Schutzrohres 4 entspricht.

Die Breite F einer Federzunge 60 beträgt insbesondere 3 mm bis 60 mm; insbesondere beträgt die Breite F etwa 3% bis 10% der Länge L des Lagerabschnitts 14 (Fig. 21).

Die Federzungen 60 bilden einen elastischen Endkopf 66 des Lagerabschnitts 14.

Zwischen den Enden 18 und 19 mit den elastischen Endköpfen 66 ist zumindest ein steifes Stützelement 27 vorgesehen. Das steife Stützelement 27 liegt in einer Ebene 40, auf der die Längsmittelachse der Lagerhülse 15 senkrecht steht. Das steife Stützelement 27 weist vorteilhaft quer zu der Ebene eine Breite auf, die geringer ist als die Ausdehnung längs zu der Ebene 40. Der maximale Außendurchmesser B des steifen Stützelementes 27 ist vorteilhaft mindestens 10-mal so groß wie dessen Breite. Das steife Stützelement 27 weist vorteilhaft eine ebene, flächige Gestalt in Form einer Ringscheibe auf. Der Außendurchmesser B ist als Einhüllende zu verstehen, das Stützelement 27 selbst kann auch einen von der Kreisform abweichenden Querschnitt aufweisen.

Im gezeigten Ausführungsbeispiel nach den Figuren 20 und 21 ist ein erstes steifes Stützelement 27.1 mittig zu den Enden 18 und 19 angeordnet; beidseitig des mittigen steifen Stützelementes 27.1 ist jeweils ein weiteres steifes Stützelement 27.3 und 27.2 angeordnet. Die Stützelemente 27.1 und 27.2 bzw. 27.1 und 27.3 begrenzen einen Zwischenraum 45, mit einer in Richtung der Längsmittelachse 20 gemessenen Breite x. In jedem Zwischenraum 45 ist ein elastisches Stützelement 37 angeordnet, welches in den Figuren 22 und 25 im Schnitt dargestellt ist.

Das elastische Stützelement 37 im Zwischenraum 45 ist als vorzugsweise geradlinige Federzunge 68 ausgebildet, welche sich etwa tangential zum Außenumfang 16 der Lagerhülse 15 erstreckt. Im gezeigten Ausführungsbeispiel nach den Figuren 22 und 25 liegen zwei Federzungen 68 bezogen auf die Längsmittelachse 20 der Lagerhülse 15 einander etwa diametral gegenüber. Jede Federzunge 68 ist über einen U-förmig gestalteten Anschlussabschnitt 69 an die Lagerhülse 15 angebunden. Das freie Ende der Federzunge ist als radiale Anlagefläche 67 ausgebildet, die - vgl. Fig. 25 - zur Anlage an den Innenumfang 44 des Schutzrohres 4 dient. Das elastische Stützelement 37 endet mit seinen Anlageflächen 67 auf einem Durchmesser E.

Über die axiale Länge eines Lagerabschnittes 14 sind somit an den Enden 18 und 19 elastische Stützelemente 37 vorgesehen; zwischen den Enden 18 und 19 sind im Ausführungsbeispiel drei steife Stützelemente 27.1, 27.2 und 27.3 vorgesehen, die jeweils in einer Ebene 40 liegen, zu welcher die Längsmittelachse 20 der Lagerhülse 15 senkrecht steht. Die steifen Stützelemente 27.2 und 27.3 liegen mit einem Abstand x zum mittleren Stützelement 27.1, wobei in den Zwischenräumen 45 weitere elastische Stützelemente 37 angeordnet sind. Die elastischen Stützelemente 37 in den Zwischenräumen 45 sowie an den Enden 18, 19 des Lagerabschnitts 14 ragen im unbelasteten Zustand über den Durchmesserkreis 64 des Innendurchmessers S hinaus. Bei der Montage in das Schutzrohr 4 gemäß Fig. 25 werden die Federzungen 68, 60 von ihrem unbelasteten Außendurchmesser E radial nach innen gedrückt und liegen dann mit ihren Anlageflächen 67, 62 mit Federkraft am Innenumfang 44 des Schutzrohres 4 an. Im Ausführungsbeispiel ist der unbelastete Außendurchmesser E aller Federzungen 68, 60 gleich. Es kann vorteilhaft sein, dass sich die elastischen Stützelemente 37 in ihrem Außendurchmesser E unterscheiden. Vorteilhaft weisen die Federzungen 68 im mittleren Bereich des Lagerabschnitts 14 in unterschiedliche Drehrichtungen. Auf diese Weise kann auch im mittleren Bereich des Lagerabschnitts 14 eine in beide Richtungen vorgespannte Abstützung realisiert werden, so wie dies analog zum T-förmigen elastischen Stützelement 37 im Endbereich gegeben ist.

Die axiale Breite x der elastischen Stützelemente 37 bzw. der Federzungen 68 im mittleren Bereich des Lagerabschnitts 14 entspricht etwa der axialen Breite F der Federzungen 60 an den Enden 18, 19 des Lagerabschnitts 14. Die Breiten F und x der elastischen Stützelemente 37 können gezielt an die lokalen Belastungen angepasst sein; insbesondere haben die Breiten F und x unterschiedliche Größen. Die Summe aller axialen Breiten aller Stützelemente 17 (elastische Stützelemente 37, steife Stützelemente 27) beträgt vorteilhaft weniger als 90% der Abschnittslänge Z des Lagerabschnitts 14. Zweckmäßig beträgt die Summe aller axialen Breiten der steifen Stützelemente 27 und der elastischen Stützelemente 37 weniger als 70%, insbesondere weniger als 50% der Abschnittslänge Z des Lagerabschnitts 14. Diese Ausgestaltung gewährleistet, dass mindestens 10% der Abschnittslänge Z des Lagerabschnitts 14 ohne unmittelbare radiale Abstützung im Schutzrohr 4 ist.. Um eine gute Abstützung zu erzielen sind vorteilhaft mindestens 10% der Länge des Lagerabschnitts 14 radial abgestützt.

Ein einzelnes elastisches Stützelement 37 an einem Ende 18 und/oder 19 des Lagerabschnitts 14 erstreckt sich insgesamt über mindestens 180° des Umfangs der Lagerhülse 15. Die Gesamterstreckung ergibt sich aus der Summe der Einzelerstreckungen M der einzelnen Federzungen 60. Die Lagerhülse 15 ist über mindestens die Hälfte ihres Umfangs in radialer Richtung von dem elastischen Stützelement 37 überdeckt. Zweckmäßig ist eine Erstreckung bzw. Überdeckung von mehr als 270°, insbesondere mehr als 300° Umfangswinkel.

Ein einzelnes elastisches Stützelement 37 zwischen den steifen Stützelementen 27 erstrecken sich vorteilhaft insgesamt über einen Umfangswinkel kleiner 200°, insbesondere etwa 180°, wobei jede Federzunge 68 eine einzelne Überdeckung N von vorteilhaft der Hälfte der Gesamtüberdeckung, also etwa 90° mit der Lagerhülse 15 aufweist, wie insbesondere die Figuren 22 und 25 zeigen. Durch den gegenüber den Stützelementen 37 im Endbereich 18, 19 geringeren Überdeckungswinkel N ist eine Entformung der Federzungen 68 quer zur Längsrichtung der Lagerhülse 15 in Entformungsrichtung 81 bzw. 81' möglich. Hierzu sind entsprechende Entformungsschrägen 80 ausgebildet. Bei einem geringeren Überdeckungswinkel wird die Verarbeitung der Lagerabschnitte 14 bei der Montage als Schüttgut erschwert. Die steifen Stützelemente 27 sind derart konzipiert, dass sie ein Verhaken zweier Federzungen 60, 68 unterschiedlicher Lagerabschnitte 14 unterbinden.

Die elastischen Stützelemente 37 der Endköpfe 66 sind so ausgebildet, dass zwischen einander zugewandten Enden der Federzungen 60 eine Lücke 65 verbleibt. Wie Fig. 24 zeigt, ist die Lücke 65 geeignet, um den Längswulst 57 des Schutzrohres 4 aufzunehmen. Die radialen Anlageflächen 67 der Anlageabschnitte 62 kommen so vorteilhaft auf beiden Seiten der Längswulst 57 zu liegen, wodurch zugleich eine Drehsicherung des Lagerabschnittes 14 gewährleistet ist. Die Federzungen 60 der elastischen Stützelemente 37 im Endbereich werden vorteilhaft längs zur Längsrichtung des Lagerabschnitts 14 entformt. Die Lücken 65 zwischen den einander gegenüberliegenden Federzungen 60 sind vorteilhaft derart gewählt, dass ein Einhaken einer Federzunge 60 eines anderen Lagerabschnitts 14 vermieden ist. Die Winkelabstände zwischen in Umfangsrichtung benachbarten Federzungen 68 eines elastischen Stützelementes 37 im mittleren Bereich des Lagerabschnitts 14 sind größer als bei Federzungen 60 der elastischen Stützelemente 37 im Bereich der Enden 18, 19 des Lagerabschnitts 14.

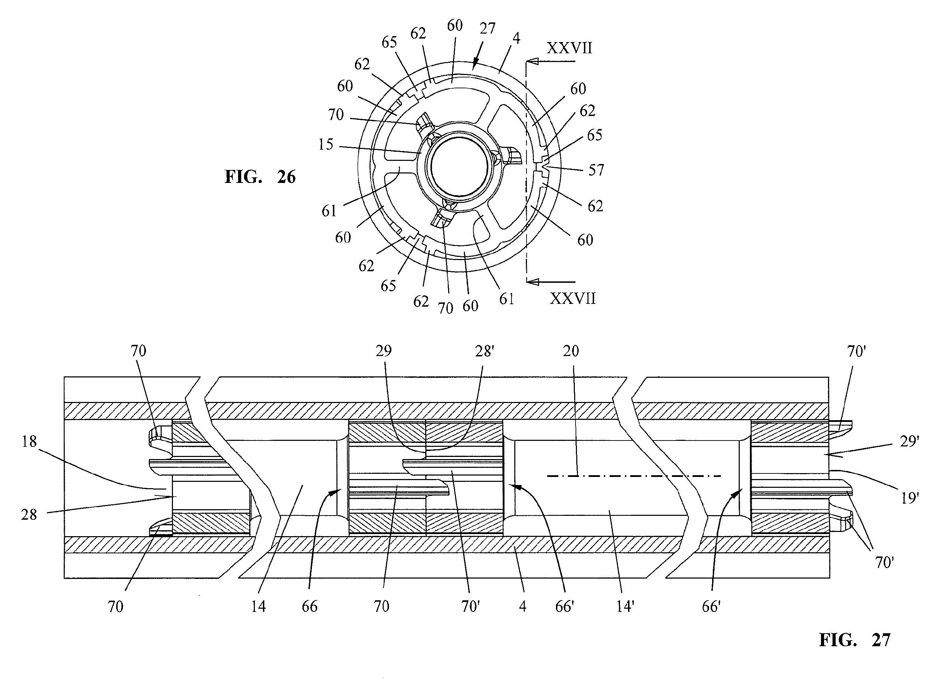

Fig. 26 zeigt einen in einem Schutzrohr angeordneten Lagerabschnitt 14, der - siehe Darstellung gemäß Fig. 27 - längs der Schnittlinie XXVII-XXVII angeschnitten ist. In Fig. 27 sind ein erster Lagerabschnitt 14 und ein folgender Lagerabschnitt 14' vorgesehen, die mit ihren Enden 18, 19 aneinander liegen. Dabei können - wie Fig. 27 zeigt - die Stirnseiten 28 und 29 axial aneinander anliegen.

Gemäß einer Weiterbildung der Erfindung sind Eingriffselemente 70 vorgesehen, die axial aus der Stirnseite 28 bzw. 29 vorstehen. Die in den in den Ausführungsbeispielen der Figuren 20 bis 29 dargestellte Länge Z der Lagerabschnitte 14 ist entsprechend um die Länge der Eingriffselemente 70 vergrößert. Wie Fig. 27 zeigt, sind die Eingriffselemente 70 vorteilhaft am Außenumfang 16 der Lagerhülse angeordnet, so dass sich die Eingriffselemente 70 der Lagerhülse 14 und die Eingriffselemente 70' der folgenden Lagerhülse 14' nebeneinander schieben und sich somit in Umfangsrichtung kontaktieren können. Dadurch kann ein Lagerabschnitt nicht gegenüber einem nachfolgenden Lagerabschnitt durchdrehen. Insbesondere werden die Lagerabschnitte 14 und 14' durch die axial ineinandergreifenden Eingriffselemente 70, 70' in Umfangsrichtung drehfest miteinander verbunden. Die Eingriffselemente 70, 70' liegen vorzugsweise zwischen den Tragrippen 61 der Federzungen 60 der Endköpfe 66.

Die Eingriffselemente 70 weisen vorteilhaft zueinander den gleichen Winkelabstand auf, wie die Lücken 65 zueinander. In einem angenommenen Betriebsfall, bei dem ein Lagerabschnitt 14 mit seiner Lücke 65 über den Längswulst 57 rutscht, kann dieser Lagerabschnitt 14 sich nur solange weiterdrehen, bis die nächste Lücke 65 mit dem Längswulst 65 in Eingriff kommt. Vorteilhaft unterbinden die Eingriffselemente 70, 70' eine Relativdrehung der Lagerabschnitte 14 zueinander in nur einer Drehrichtung.

In Längsrichtung des Lagerabschnittes 14 sind mehrere und unterschiedliche Stützelemente 27, 37 mit je einer begrenzten axialen Länge angeordnet. Vorteilhaft liegen ungleiche Stützelemente 27, 37 benachbart zueinander, wobei auch gleichartige Stützelemente 27, 37 mit axialem Abstand direkt aufeinander folgen können (Fig. 28).

In Fig. 28 ist ein Lagerabschnitt 14 eines weiteren Ausführungsbeispiels gezeigt; im Vergleich zum Lagerabschnitt in Fig. 21 ist das mittlere steife Stützelement entfallen; die elastischen Stützelemente 37 mit den Federzungen 68 liegen ohne trennendes steifes Stützelement 27 nebeneinander. Die Breite der Federzungen 60, 68 und der axiale Abstand der gleichartigen Stützelemente 27, 37 sind vorteilhaft derart gewählt, dass ein Einhaken einer fremden Federzunge vermieden ist.

Die Anlagestelle 67, 62 der Federzunge 68, 60 ist vorteilhaft winkelversetzt zu einer Anlagestelle 67,62 einer axial folgenden Federzunge 68,60 desselben Lagerabschnittes 14 vorgesehen.

Im Ausführungsbeispiel nach Fig. 29 liegen zwischen den elastischen Endköpfen eine Mehrzahl von Zwischenabschnitten 54, wobei jeder Zwischenabschnitt 54 durch ein steifes Stützelement 27 begrenzt ist.

Unterschiedliche Ausbildungen der Stützelemente 17 haben gemeinsam, dass sie sich über eine nur begrenzte axiale Länge des Lagerabschnitts erstrecken; auch die Summe aller Axialerstreckungen der Stützelemente eines Lagerabschnittes 14 überdeckt nur einen Teil der Gesamtlänge des Lagerabschnitts 14.

Es kann vorteilhaft sein, nahezu den gesamten Lagerabschnitt 14 mit - unterschiedlich ausgebildeten - Stützelementen 27, 37 zu versehen. Dabei können über die Länge des Lagerabschnittes 14 unterschiedliche Stützelemente 17 derart angeordnet werden, dass sich die Stützwirkung des Lagerabschnittes 14 in seiner Längsrichtung ändert.

## Patentansprüche

1. Lageranordnung für eine in einem Schutzrohr (4) geführte Antriebswelle (10), die ein Werkzeug (7) mit einem Antrieb (2) verbindet, wobei die Lageranordnung aus mehreren im Schutzrohr (4) angeordneten Lagerrohrsegmenten (30) besteht, und
• die Lagerrohrsegmente (30) in Längsrichtung (13) des Schutzrohres (4) hintereinander liegen
• und die Lagerrohrsegmente (30) von der Antriebswelle (10) durchragt sind,
• wobei zumindest ein Lagerrohrsegment (30) als Lagerabschnitt (14, 14') mit einer zentralen Lagerhülse (15) ausgebildet ist,
• und die Lagerhülse (15) von ihrem Außenumfang (16) abstehende Stützelemente (17) umfasst,
• und die Lagerhülse (15) des Lagerabschnitts (14, 14') gegenüber dem Innenumfang des Schutzrohres (4) von den Stützelementen (17) radial abgestützt ist,
**dadurch gekennzeichnet,**
• **dass** der Lagerabschnitt (14, 14') aus der Lagerhülse (15) und den Stützelementen (17) einteilig ausgebildet ist,
• **dass** im Schutzrohr (4) mehrere Lagerabschnitte (14, 14') aufgenommen sind,
• **dass** die Lagerabschnitte (14, 14') aufeinander folgen, und
• **dass** die summierte Länge (SL) der angeordneten Lagerrohrsegmente (30) größer als 60% der Länge (L) des Schutzrohres (4) ist.

2. Lageranordnung nach Anspruch 1,
**dadurch gekennzeichnet, dass** sich ein erster Lagerabschnitt (14) an einem folgenden Lagerabschnitt (14') abstützt.

3. Lageranordnung nach Anspruch 2,
**dadurch gekennzeichnet, dass** eine erste Stirnseite (29) des ersten Lagerabschnittes (14) an der folgenden Stirnseite (28) des folgenden Lagerabschnittes (14') anliegt.

4. Lageranordnung nach Anspruch 2,
**dadurch gekennzeichnet, dass** eine Stirnseite (29) eines ersten Lagerabschnittes (14) axiale Eingriffselemente (70) aufweist, die mit Eingriffselementen (70') an einer zugewandten Stirnseite (28') eines folgenden Lagerabschnittes (14') zusammenwirken.

5. Lageranordnung nach Anspruch 1,
**dadurch gekennzeichnet, dass** der Lagerabschnitt (14, 14') im Schutzrohr (4) drehgesichert gehalten ist.

6. Lageranordnung nach Anspruch 1,
**dadurch gekennzeichnet, dass** der Lagerabschnitt (14) eine Abschnittslänge (Z) von 10 mm bis 300 mm aufweist.

7. Lageranordnung nach Anspruch 6,
**dadurch gekennzeichnet, dass** der Lagerabschnitt (14) eine Abschnittslänge (Z) von 100 mm bis 200 mm aufweist.

8. Lageranordnung nach Anspruch 1,
**dadurch gekennzeichnet, dass** der Lagerabschnitt (14) ein Kunststoffspritzteil ist.

9. Lageranordnung, insbesondere nach Anspruch 1,
**dadurch gekennzeichnet, dass** ein Lagerabschnitt (14) einerseits steife Stützelemente (27) und andererseits elastisch ausgebildete Stützelemente (37) aufweist.

10. Lageranordnung nach Anspruch 9,
**dadurch gekennzeichnet, dass** die Enden (18, 19) eines Lagerabschnitts (14) elastische Stützelemente (37) tragen und zwischen den Enden (18, 19) des Lagerabschnittes (14) zumindest ein steifes Stützelement (27) angeordnet ist.

11. Lageranordnung nach Anspruch 10,
**dadurch gekennzeichnet, dass** die Enden (18, 19) eines Lagerabschnitts (14) ausschließlich elastische Stützelemente (37) tragen.

12. Lageranordnung nach Anspruch 11,
**dadurch gekennzeichnet, dass** zwischen den Enden (18, 19) des Lagerabschnittes (14) zumindest zwei steife Stützelemente (27) vorgesehen sind, und in dem Zwischenraum (45) zwischen den steifen Stützelementen (27) zumindest ein elastisches Stützelement (37) angeordnet ist.

13. Lageranordnung nach Anspruch 10,
**dadurch gekennzeichnet, dass** die elastischen Stützelemente (37) als in Umfangsrichtung der Lagerhülse (15) sich erstreckende Federzungen (60, 68) ausgebildet sind.

14. Lageranordnung nach Anspruch 10,
**dadurch gekennzeichnet, dass** die Lagerhülse (15) zusammen mit den steifen Stützelemente (27) und den elastischen Stützelemente (37) einteilig ausgebildet ist.

15. Lageranordnung nach Anspruch 10,
**dadurch gekennzeichnet, dass** das steife Stützelement (27) auf einem maximalen Außendurchmesser (B) um die Lagerhülse (15) endet, der kleiner oder gleich dem Innendurchmesser (S) des Schutzrohres (4) ist.

16. Lageranordnung nach Anspruch 10,
**dadurch gekennzeichnet, dass** sich das steife Stützelement (27) in einer Ebene (40) erstreckt, zu der die Längsmittelachse (20) der Lagerhülse (15) senkrecht liegt.

17. Lageranordnung nach Anspruch 1,
**dadurch gekennzeichnet, dass** über eine Abschnittslänge (Z) des Lagerabschnitts (14) mehrere mit axialem Abstand (a) zueinander liegende Stützelemente (17) angeordnet sind.

18. Lageranordnung nach Anspruch 1,
**dadurch gekennzeichnet, dass** ein Stützelement (17) als Stützring gestaltet ist.

19. Lageranordnung nach Anspruch 18,
**dadurch gekennzeichnet, dass** im Außenrand (31) des Stützrings eine Aussparung (32) ausgebildet ist.

20. Lageranordnung nach Anspruch 1,
**dadurch gekennzeichnet, dass** ein Lagerabschnitt (14) von dem einen ersten axialen Ende des Schutzrohres (4) und der andere Lagerabschnitt (14') von dem anderen, zweiten axialen Ende des Schutzrohres (4) eingeschoben ist.
